# EUROPEAN PATENT APPLICATION

(11) **EP 0 712 201 A2**
(43) Date of publication of application: **15.05.1996**
(21) Application number: 95202958.5
(22) Date of filing: 02.11.1995
(51) Int. Cl.: H02M 7/521, H02H 7/122

(54) **An excess current protection system for electronic GTO power converters**

(30) Priority: 09.11.1994 IT MI942266
(71) Applicant: FINMECCANICA S.p.A. AZIENDA ANSALDO, I-16128 Genova (IT)
(72) Inventor: Bobbio, Attilio, I-16157 Genova (IT)
(74) Representative: Falcetti, Carlo

(57) **Abstract**

An excess current protection system (17,37,38,32,35) for GTO electronic power converters which upon the occurrence of an excess current limited in its rate of increase by an inductor (9), instantaneously inhibits the firing of the quenched GTOs and controls quenching of the fired GTOs immediately or with a delay, thereby ensuring that this takes place with a predetermined delay after their firing less than the minimum firing interval necessary for discharge of the excess voltage limiters associated with the GTOs.

The system automatically resets itself if the current ceases to be in excess, and stops the operation of the converter after a predetermined number of interventions within a predetermined time interval.

## Description

### FIELD OF THE INVENTION

The present invention relates to a current overload protection system for GTO electronic power converters, in particular for converters for the supply of three phase asynchronous traction motors and the like.

GTOs are electronic power components which are becoming ever more widespread in use in converters for converting DC into AC because, as opposed to usual controlled diodes or thyristors they can be controlled to fire and be quenched via a control electrode or "gate".

However, as opposed to other power semiconductors, GTOs have a maximum current value above which gate-controlled quenching cannot take place even though they are able to conduct for a long time a current greater than the maximum which can be quenched.

If a GTO receives a quenching command whilst the current which flows through it is greater than the maximum value, it is subject to permanent damage.

For this reason there is a tendency to use GTOs in working conditions in which the maximum current quenched is normally about two thirds of the maximum which can be quenched.

Further, a GTO supports voltages between anode and cathode up to a maximum predetermined value and in order to avoid the inductive component of the impedance of the load or of the voltage source from causing, at quenching, voltage overloads greater than the maximum admissible voltage, it is necessary to use, in parallel with the GTO's overvoltage limitation circuits, so-called "snubbers", essentially RC networks which charge upon quenching, remain charged for the whole of the time that the GTO is quenched, and discharge exponentially through the GTO when this is fired.

Therefore a GTO must not be quenched before a predetermined time has elapsed since it was previously fired, sufficient to allow the almost complete discharge of the snubber.

Generally, it is required that the minimum firing time is equal to three times the time constant of the snubber to allow the snubber to become 95% discharged.

The protection of a GTO against damage from malfunctioning must therefore satisfy requirements of proper timing to ensure that operation the limit of the operative ones does not have time to degenerate into a irrecoverable breakdown situation, but at the same time this must be reconciled with the use for effective intervention of the snubber.

The most critical malfunctioning situation is a short circuit, in which the current is not limited by the load and can rapidly reach values very much higher than the maximum current which can be quenched by the GTO.

The short circuit may be outside the converter, typically be accidental contact between two outputs or by breakdown of the load insulation, or internal due to failure or malfunctioning of a power component (for example the failed quenching of a complementary GTO).

It is moreover desirable that protection of a GTO should offer the possibility of easy, even automatic resetting, whenever the cause of the protective intervention ceases.

This is necessary in particular for protection of converters used in electric traction vehicles in which the operation of a non-resettable protection device could lead to immobilisation of the vehicle without there being any real need for it, with serious and expensive consequences.

### STATE OF THE ART

It has been proposed to use fuses to protect GTOs.

This solution is not in general satisfactory in the case of GTOs in that fuses expressly provided for protecting semiconductors are not sufficiently fast to prevent damage to GTOs in the case of a short circuit.

It is possible to over-size the GTOs (that is to say to use GTOs capable of supporting currents very much greater than the normal working current, and chosen in such a way as to be able to support a short circuit current for the time that the fuse takes to open the circuit); this, however, involves a consistent increase in the cost of the converter and a very low efficiency in that the control circuits must also be over-sized and have to work in non-optimal conditions.

Moreover protection via fuses is not rapidly resettable and requires transport to the factory and the intervention of specialised personnel.

A second solution consists in the use of an auxiliary power semiconductor intended to impede or limit the flow of excess currents in the GTO.

The excess current can be diverted onto a thyristor disposed in parallel to but is not limited by the GTO, and must be switched off in some way.

This involves further increases in costs.

### SUMMARY OF THE INVENTION

These disadvantages are eliminated by the current overload protection system which forms the subject of the present invention in that an inductor positioned in series with the supply to the converter to be protected, limits the rising rate of the current and, when the current reaches a threshold greater than the normal maximum working current of the GTO of the converter, but less than the maximum current which can be quenched by the GTO, allows a timed procedure for immediate inhibition of firing of a quenched GTO and immediate or deferred quenching of a fired GTO to take place as a function of the respective instant of firing and in any event in a sufficiently short time to prevent the current from reaching non quenchable levels even in the case of a short circuit.

The maximum quenching delay is less than the minimum firing time of GTOs set to allow the complete discharge of the associated snubbers with them but is in any event sufficient to ensure at least 50% discharge thereof.

Preferably the maximum quenching delay is equal to the time constant of the snubbers in such a way that these are 66% discharged. This ensures that the voltage overload at quenching is contained within non-destructive limits of the GTO whilst quenching in these conditions is not repeated with excessive frequency.

A power diode which is normally reversed biased is connected in parallel with the inductor in such a way as to allow the current which flows in the inductor to continue to flow in the inductor and in the diode when the GTOs are quenched.

This current falls according to the time constant defined by the resistance of the inductor and by its inductance.

Advantageously, according to a further aspect of the invention, the protection system is reset automatically when the current in the inductor falls below the threshold value at which intervention is caused, that is with a variable delay in dependence on the quenching delay and the consequent magnitude of the excess current.

The automatic resetting is limited to a predetermined time interval after which it is no longer possible.

Therefore the number of possible attempts at automatic resetting is inversely proportional to the magnitude of the overload, and the power dissipated by the GTOs upon overload quenching during the reset period remains practically constant and limited independently of the magnitude of the overload.

In this way the dynamic robustness of GTOs to overloads is exploited in an optimal manner.

### BRIEF DESCRIPTION OF THE DRAWINGS

Characteristics and advantages of the invention will become clearer from the following description of a preferred embodiment of the invention and the attached drawings, in which:
Figure 1 is a schematic block diagram of a preferred embodiment of an excess current protection system for GTO electronic power converters in accordance with the present invention;
Figure 2 shows a timing logic circuit of the system of Figure 1 specific for each GTO; and
Figure 3 is a protection logic circuit of the system of Figure 1, common to all GTOs.

### DESCRIPTION OF A PREFERRED EMBODIMENT

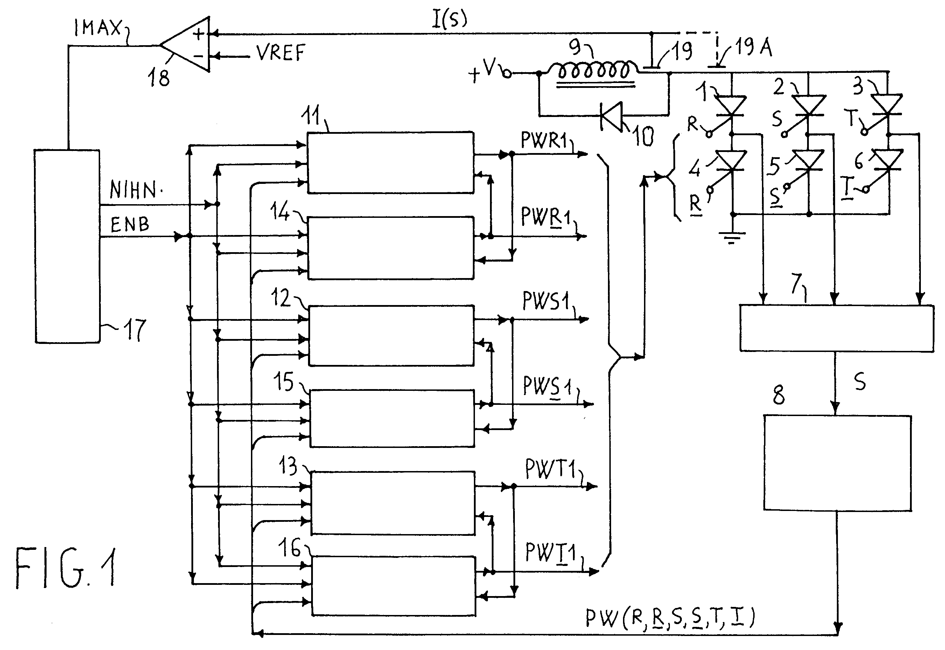

With reference to Figure 1 there is shown a three phase converter formed by six GTOs 1, 2, 3, 4, 5, 6 connected in a known way in pairs in series 1 and 4, 2 and 5, 3 and 6 and a DC voltage source +V completed by a conventional ground.

The converter is connected to the voltage source via an inductor 9 in parallel with a diode 10 the cathode of which is connected to the voltage source +V.

The common node of each pair of GTOs is connected to a three phase load 7, in the application illustrated a synchronous motor, which is thus supplied with a suitable sequence of voltage pulses.

The phases of a three phase system for a three phase load are conventionally identified with the letters R, S, T.

For this reason the gate electrodes of the GTOs 1, 2, 3, which when fired each connect one phase of the load to the voltage +V are identified with the letters R, S, T, whilst the gate electrodes of the GTOs 4, 5, 6 which are respectively complementary to the GTOs 1, 2, 3 are identified with the letters R, S, T, respectively.

The significance of the underlining here and hereinafter represents the negation or complementation of the item or signal identified by the underlined reference.

The supply to the load is obtained by simultaneously firing at least one of the GTOs 1, 2, 3 (or high side GTO) and at least one of the low side GTOs which is not complementary to the fired high side GTO.

Thus, for example, the simultaneous firing of GTOs 1 and 5 causes application of the voltage +V between the two phases R and S of the load and firing of GTOs 4 and 2 complementary to the previous ones, causes application of the voltage +V across the two phases S and R of the load, that is to say the application of the voltage -V across the phases R and S.

It is evident that the simultaneous firing of one GTO such as 1 and its complement 4 short circuits the converter and must be avoided.

The firing of the different GTOs is controlled by a regulation system 8 which, in a known manner, and in dependence on a variable to be regulated, for example the speed "s" of the motor, generates a plurality of duration modulation signals PW (R, R, S, S T, T,) which when asserted control firing of the corresponding GTOs.

These signals are individually input, each to one of six timing logic units respectively 11, 12, 13, 14, 15, 16 which generate control signals respectively PWR1, PWS1, PWT1, PWR1, PWS1, PWT1.

When asserted these signals individually control firing of corresponding GTOs through power control and galvanic insulation circuits known per se and not shown and, when deasserted, cause quenching of the corresponding GTO.

The assertion and deassertion of the various PWX1 signals (where X equals R, S, T, R, S, T,) is conditional to internal timing of the logic units 11, 12, 13, 14, 15, 16 and to signals received from the outside.

In particular, each unit which controls firing and quenching of a predetermined GTO receives, as a firing inhibition signal, the signal PWX1 emitted by the unit which controls firing of the complementary GTO .

Thus, the unit 11, which generates the signal PWR1, receives the signal PWR1 from the unit 14 and sends the signal PWR1 to the unit 14.

Similarly for the other pairs of units 12, 15, and 13, 16.

Each unit receives, from a common protection unit 17, a general GTO firing consent signal NINH and a signal ENB which allows the GTO to be maintained in its fired state for a predetermined minimum time interval.

The common protection unit 17 is controlled by a maximum current signal IMAX generated by a comparator 18 which receives a reference signal VREF at its inverting input and at its non-inverting input receives a voltage signal I(S) proportional to the current input to the converter.

The current input to the converter is preferably detected by a Hall effect sensor 19 in order to avoid resistive dissipations.

Conveniently, for reasons which will be explained hereinbelow, the sensor 19 is disposed in the loop formed by conductor 9 and diode 10 so as to detect not only the current delivered to the converter but also possible currents which circulate in the loop.

When the signal I(S) correlated to the measured current exceeds the reference voltage VREF the signal IMAX is asserted to indicate that the converter is in overload conditions and the unit 17 is activated.

It is evident that since each GTO cannot be fired simultaneously with its complementary GTO, even though two GTOs one high side and one low side can be simultaneously fired, in normal operating conditions there is always only one high side GTO and one low side GTO in a fired state and the current input by the inverter is the whole of the current which flows in one of the fired GTOs.

The overload condition of the converter is therefore also an excess current condition for at least one of the GTOs.

Thus, in the case of a failure of one of the GTOs to quench, the excess current condition is essentially due to the joint firing of one GTO and its complementary GTO and to the consequent short circuit of the converter, and the contribution to the current input to the converter due to the other GTOs which may be fired is secondary.

The inductor 9 ensures that independently of the load impedance, and therefore also in the case of a short circuit, the rate of variation of current with time is less than a predetermined value in such a way that within the intervention time envisaged for the protection, the current does not rise from the excess current level which causes protective intervention to a value greater than the maximum quenching current of the GTOs.

Obviously, the higher the inductance of the inductor 9 the lower the rate of variation of the current, but excessive inductance values are incompatible with a reasonable and economical sizing of the inductor and with the requirement to ensure that in normal conditions of use and load variations the inductor does not cause substantial variations in the voltage effectively applied to the converter.

In other words the inductance of the inductor must be as far below the load impedance as possible and preferably is chosen in such a way that in a time interval equal to the time constant of the snubber the variations in current resulting from a short circuit lie between 20% and 30% of the maximum current quenchable by the GTOs.

Upon activation of the unit 17 the signals ENB and NINH are deasserted and the logic units from 11 to 16 are controlled, as long as NINH is deasserted, to prevent any firing of the GTOs and, as long as ENB is deasserted, to control the quenching of any fired GTOs after a predetermined time has elapsed from their firing, less than the minimum firing time required for discharge of the associated snubber.

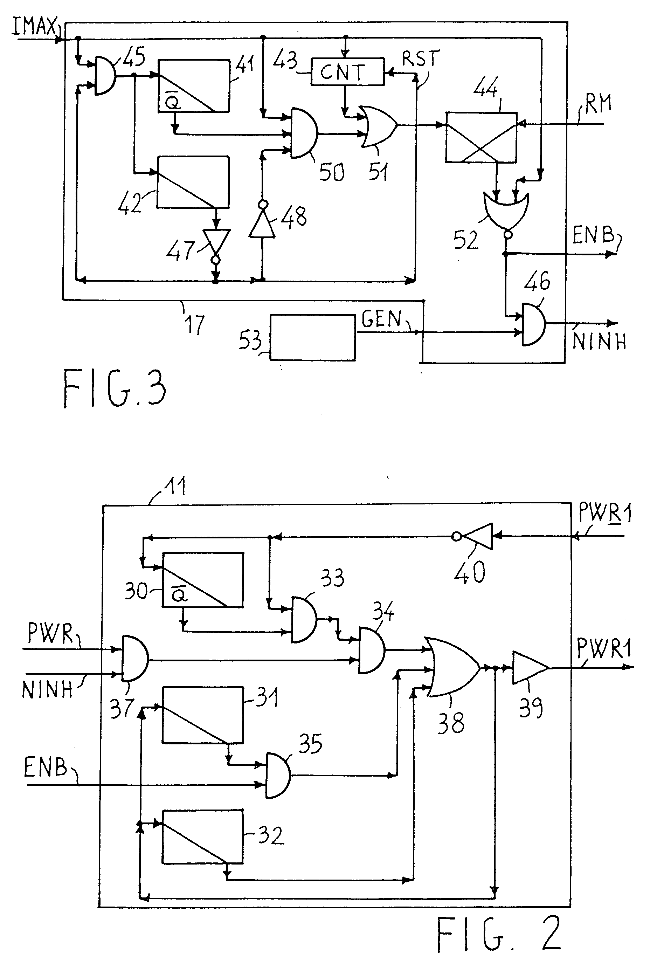

Before considering the structure of the common protection unit it is appropriate to consider the structure of the logic units 11 to 16 one of which is shown in the electrical diagram of Figure 2, the different units all being identical to one another.

The logic unit 11 of Figure 2, which is essentially a timing logic unit, comprises three univibrators 30, 31, 32 or equivalent timing devices, four two-input AND logic gates 33, 34, 35, 37, one logic OR gate 38, a driving interface circuit or driver 39 and a logic NOT element 40. The logic unit 11 for protection of the GTO1 (Figure 1) on the high side of the R phase receives four signals at its input:
- PWR from the regulation system for modulating the duration of the pulses for firing and quenching of the GTO 1,
- NINH and ENB from the common protection unit 17,
- PWR1 from the control logic unit of the complementary GTO to enable firing of the GTO 1 only when the complementary GTO is not controlled to fire.

The signal PWR1 is applied to the input of the NOT 40 the output of which is connected to the activation input of the univibrator 30 and to one input of the AND gate 33 the second input of which is connected to the negative output Q of the univibrator 30.

The output of the AND gate 33 is connected to one input of the AND gate 34 the second input of which is connected to the output of the AND gate 37.

This receives the signals PWR and NINH at its input.

The output of the AND gate 34 is connected to one input of the OR gate 38 the output of which is connected to the input of the driver 39 and to the activation input of the univibrators 31, 32.

The direct output of the univibrator 32 is connected to one input of the OR 38.

The direct output of the univibrator 31 is connected to one input of the AND gate 35 which receives the signal ENB at its second input and the output of which is connected to one input of the OR gate 38.

The operation of the unit 11 is very simple.

If the signal PWR1 is deasserted and the univibrator 30 is not activated, whilst the signal NINH is asserted, the received signal PWR is transferred to the output as a signal PWR1 with only the propagation delays of the logic chain.

The signal PWR1 controls firing of GTO 1 and, having being sent to the logic output 14 (Figure 1) prevents this from asserting signal PWR1.

It can be seen that upon switching of PWR1 from the asserted level to the deasserted level the signal PWR, when asserted, is not immediately transferred to the output.

In fact the univibrator 30 is activated and its output Q is deasserted.

The output of the AND gate 33 thus rises to the logic level 1 only after a time interval defined by the activation time of the univibrator 30 and enables the AND gate 34 with a predetermined delay.

The inhibition intervention is on the other hand immediate and as soon as PWR1 is asserted the gate 34 is disabled.

When, by the effect of the assertion of PWR (with NINH still asserted and the gate 34 enabled) the output of the OR gate 38 goes to logic level 1, the two univibrators 31 and 32 are activated and the logic level 1 present at their output applied to the input of the OR 38 maintains the output of the OR 38 at logic level 1 for the longer of the activation times of the two univibrators even if PWR is deasserted.

The activation time of the univibrator 31 is for example of the order of 72 µsec and corresponds to time necessary for the snubber associated with the GTO 1 to discharge almost completely.

The activation time of the univibrator 32 is shorter and, for example, of the order of 24 µsec, equal to the time constant of the snubber, and corresponds to the time necessary for the snubber associated with the GTO 1 to discharge partially by about 63%.

It is evident that if ENB is asserted the minimum assertion time of PWR1, independently of the duration of PWR, is 72 µsec.

Now supposing that NINH and ENB are deasserted.

If PWR was deasserted the assertion of PWR1 is prevented with immediate effect.

If PWR was asserted, the AND gate 35 is disabled and the signal PWR1 already asserted is deasserted with immediate or delayed effect in dependence on the state of the univibrator 32, in particular on the delay in the deasserted signal ENB relative to the assertion instant of PWR.

In the worst case in which ENB is deasserted immediately after assertion of PWR, the signal PWR1 is asserted with a maximum delay from deassertion of ENB equal to the activation time of the univibrator 32.

Figure 3 shows the block circuit diagram of a protection unit 17 common to all the GTOs, the function of which is to generate the signals NINH and ENB.

The unit 17 comprises two univibrators 41, 42, a counter 43, an RS flip flop 44 and logic gates such as two two-input AND gates 45, 46, NOT elements 47, 48, one three-input AND gate 50, one OR gate 51 and one NOR gate 52.

The unit 17 receives at its input the signal IMAX which, when asserted is indicative of overload or short circuit, and a manual reset signal RM.

It also receives a general enable signal from an external control unit 53.

The signal IMAX is applied to one input of the AND gate 43, to one input of the NOR gate 52, to one input of the counter 43 which increments at each assertion of IMAX, and to one input of the AND gate 50. The output of the AND gate 45 is connected to the activation inputs of the univibrators 41, 42.

The inverted output Q of the univibrator 41 is connected to a second input of the AND gate 50.

The direct output of the univibrator 42 is connected to the input of the NOT 47 the output of which is connected to the second output of the AND gate 45, to the reset input of the counter 43 and to the input of a NOT 49 the output of which is connected to a third input of the AND gate 50 the output of which is connected to one input of the OR 51.

At its second input the OR 51 receives an output signal from the counter 43 asserted when the counter reaches a predetermined count value.

The output of the OR gate 51 is connected to the set input of the flip flop 44 which receives the manual reset signal RM at its reset input.

Finally the direct output Q of the flip flop 44 is connected to one input of the NOR 52 at the output of which the signal ENB is made available.

The output of the NOR 52 is connected to one input of the AND gate 46 which receives the signal GEN at a second input.

The signal NINH is made available at the output of the AND gate 46.

The operation of the unit 17 is also very simple.

In normal operating conditions the signal IMAX is deasserted and the flip flop 44 is in its reset state.

Therefore the signal ENB is asserted, as is the signal NINH, if enabled by the external control unit 53 (GEN asserted).

Upon occurrence of an overload the signal IMAX is asserted and the signals ENB and NINH are immediately deasserted and remain deasserted for the whole of the time that IMAX is asserted, that is to say for the whole of the time that the current which flows in the switch is greater than the predetermined value.

It is to be noted that even if the current in the GTOs is interrupted by the intervention of the protection systems the inductor current continues to flow through the diode 10 and decreases with the characteristic time constant of the impedance of the inductor 9 (Figure 1).

It is this current which is detected by the sensor 19.

Therefore the assertion time of IMAX is much greater than the effective overload or short circuit time of the inverter.

This ensures that the GTOs which may have been quenched in overload conditions have a suitable time for dissipation of heat before a new firing and quenching operation is possible with consequent power dissipation and heating.

Simultaneously with the assertion of IMAX the two univibrators 41 and 42 are activated.

The univibrators 41, 42 have an activation period of suitable duration and define an automatic reset time interval (univibrator 41) in which new firing and quenching operations of the converter are possible and a subsequent automatic reset inhibition time interval during which a possible overload causes locking of the converter and of the protection system with the necessity of external intervention for resetting.

For this purpose the activation period T1 of the univibrator 42 is conveniently greater than that (T2) of the univibrator 41.

For example T1 can be of the order of 200 msec and T2 of the order of 400 msec. The operation of the univibrator 41 (the negative output of which is connected to one input of the AND gate 50) is to prevent, for the whole of the time interval T1, the signal IMAX, applied to the input of the AND gate 50, from being able to put the flip flop 44 into its set state.

The univibrator 42 performs a triple function: on the one hand, for the whole of the period T2 in which it is activated, it prevents the univibrators 41 and 42 from being reactivated by possible subsequent assertions of IMAX; on the other hand (via the NOT 47, 48) it prevents the intrinsic activation delays of the univibrator 41 relative to the assertion of IMAX being able to cause improper setting of the flip flop 44.

Finally, it ensures that in the inactive state the counter 43 is put into and held in its reset state.

Thus a first assertion of IMAX activates the univibrators 41 and 42 and causes, upon deassertion of ENB and NINH, inhibition of firing of the GTOs and quenching of those which are fired, in this case with a convenient delay.

Inhibition persists until deassertion of IMAX.

Subsequent assertions of IMAX during the period T1 cause incrementation of the counter 43, inhibition of the firing of the GTOs and quenching of those which are fired.

Moreover, if the counter 43 reaches a predetermined count value during the period T1 the flip flop 44 is put into its set state.

With this is excluded any possibility of subsequent refiring of the GTOs, even if IMAX is deasserted, without a manual resetting operation which asserts RM and puts the flip flop 44 into its reset state.

In the same way, if the period T1 but not the period T2 has elapsed, whilst the univibrator 42 is still in its active state, and the signal IMAX is asserted again, this is transferred through the ports 50, 51 independently of the state of the counter 43 and sets flip flop 44.

Protection against overloads is thus provided with automatic resetting which is limited in time and in the number of reset attempts, particularly indicated for traction applications where it is necessary to avoid if possible putting the vehicle out of service as a result of a temporary or intermittent overload.

The preceding description relates only to a preferred embodiment and it is clear that many variants can be introduced.

For example the various univibrators can be replaced by counters activated by a periodic timing signal generated by an oscillator and different logic elements from those indicated, such as analogue devices, can be used in different but functionally equivalent electrical circuit arrangements. It is also possible to subject the automatic resetting of the protection system rather than to the fact that the current in the inductor 9 and in the recirculation diode 10 has fallen to a predetermined level, to the fact that the current absorbed by the inverter has fallen to a predetermined level, therefore indicating that the overload is over.

In this case it is sufficient, as indicated in broken outline in Figure 1 with 19a, for the current sensor to be disposed in a branch of the supply line through which flows current effectively absorbed by the inverter rather than in the recirculation circuit formed by the inductor 9 and the diode 10.

As a further alternative it is possible to subordinate the automatic resetting to the elapse of a predetermined time interval from the occurrence of the excess current and the associated protective intervention or its return to a predetermined and acceptable level.

This time may be variable as a function of the preceding history of the protection system and, for example, may increase as a function of the number of protective interventions already performed.

## Claims

1. A system for protection of a GTO electronic power converter against excess currents, in which there are provided first timing means (34,38,31) for inhibiting the quenching of a fired GTO for a first predetermined time period after its firing sufficient to allow the discharge of a snubber associated with the GTO, characterised in that it comprises:
- an inductor (9) in series with the supply to the said converter with a normally reverse-biased diode (10) in parallel with the said inductor,
- first detection means (19,19A) for detecting the current input to said inverter,
- second means (18) for recognising excess currents coupled to said first means (19,19A) to assert an excess current signal when said current exceeds a predetermined value, and
- control means (17,37,35,32) coupled to the said second means (18) operable to inhibit the firing of the quenched GTOs of the said converter instantaneously upon assertion of the said signal, and to quench a fired GTO with a predetermined delay relating to its firing time and less than the said time period.

2. A protection system as in Claim 1, in which the said inductor (9) has an inductance value not greater than that inductance which in one third of the said predetermined first time period would limit the current variation resulting from a short circuit of the said converter to 1/5 of the maximum quenchable current of the said GTOs.

3. A protection system as in Claim 1 or Claim 2, including automatic reset means (41,50,51,44) for reinstating the operation of the said converter.

4. A protection system as in Claim 3, in which the said automatic resetting means include timing means (41) for limiting the automatic resetting to a predetermined time interval starting from a first intervention of the said protection system.

5. A protection system as in Claim 4, in which the said automatic resetting means include counting means (43) for limiting the number of times the said protection system resets automatically to a predetermined number in the said predetermined time interval.

6. A protection system as in Claim 3 or Claim 4, in which the said first current detection means (19) is disp osed in the current loop formed by the said inductor (9) and the said diode (10), and the said automatic resetting means (41,50,51,44) reinstates the operation of the said converter at a current value, detected by the said first means, less than a predetermined value.

7. A protection system as in Claim 3 or Claim 4, in which the said first current detection means (19A) is disposed outside the current loop formed by the said inductor and the said diode (10), and the said automatic resetting means (41,50,51,44) reinstates the operation of the said converter after the current value detected by the said first means has fallen below a level less than a predetermined value.
